(19) Europäisches Patentamt
European Patent Office
Office européen des brevets

(11) **EP 4 327 549 B1**

(12) **FASCICULE DE BREVET EUROPEEN**

(45) Date de publication et mention de la délivrance du brevet:
**16.04.2025 Bulletin 2025/16**

(21) Numéro de dépôt: **22722860.8**

(22) Date de dépôt: **19.04.2022**

(51) Classification Internationale des Brevets (IPC):
*H04N 23/45* (2023.01)  *H04N 23/698* (2023.01)
*H04N 23/90* (2023.01)  *H04N 23/951* (2023.01)
*G03B 37/04* (2021.01)  *H04N 7/18* (2006.01)

(52) Classification Coopérative des Brevets (CPC):
**G03B 37/04; H04N 7/181; H04N 23/45;**
**H04N 23/698; H04N 23/90; H04N 23/951;**
H04N 23/69

(86) Numéro de dépôt international:
**PCT/FR2022/050729**

(87) Numéro de publication internationale:
**WO 2022/223921 (27.10.2022 Gazette 2022/43)**

(54) **DISPOSITIF DE CAPTURE OPTIQUE**

OPTISCHE DETEKTIONSVORRICHTUNG

OPTICAL DETECTING DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.04.2021 FR 2104019**

(43) Date de publication de la demande:
**28.02.2024 Bulletin 2024/09**

(73) Titulaire: **IDEMIA Road Safety France**
**92400 Courbevoie (FR)**

(72) Inventeurs:
- **CARRION, Grégoire**
  **92400 COURBEVOIE (FR)**
- **BONNOT, Stéphane**
  **92400 COURBEVOIE (FR)**
- **ALLIOT, Samuel**
  **92400 COURBEVOIE (FR)**
- **HARBI, Rachid**
  **92400 COURBEVOIE (FR)**
- **TOUZ, Frédéric**
  **92400 COURBEVOIE (FR)**

(74) Mandataire: **IPS**
**2, place Samuel de Champlain**
**92400 Courbevoie (FR)**

(56) Documents cités:
EP-A1- 3 793 185   EP-A2- 2 504 736
WO-A1-99/45511   WO-A2-2008/016474
JP-A- 2003 134 375   US-A1- 2002 075 258
US-A1- 2012 328 152   US-A1- 2016 148 062
US-B1- 7 965 314

**Description**

DOMAINE DE L'INVENTION

L'invention concerne le domaine de la capture d'images et plus particulièrement la capture d'images de surveillance routière.

ARRIERE PLAN DE L'INVENTION

Classiquement, un dispositif de surveillance routière comprend un dispositif de capture optique d'images à haute résolution destinées à être traitées automatiquement pour en extraire le numéro d'immatriculation des véhicules et/ou des détails révélant par exemple le franchissement d'une ligne continue tracée sur la chaussée ou l'utilisation d'un téléphone mobile par un conducteur... Lorsque l'axe routier surveillé comprend plusieurs voies, il est nécessaire que le dispositif de surveillance routière puisse réaliser une capture d'une image couvrant l'ensemble des voies surveillées. Un tel dispositif requiert alors l'utilisation d'un capteur à objectif grand angle de champ (distance focale faible) pour pouvoir couvrir l'ensemble des voies de l'axe routier surveillé. La résolution de ce capteur doit demeurer élevée afin de pouvoir en extraire des images exploitables pour le traitement automatisé. De tels capteurs à haute résolution couplés avec un objectif grand angle sont coûteux et génèrent des volumes importants de données qui ralentissent la cadence de capture d'image et requièrent une électronique de traitement automatisé très puissante, et qui impacte également les coûts de production, d'exploitation et de stockage des images capturées. La demande de brevet US 20160148062 A1 divulgue un système de caméras comprenant plusieurs caméras à grand angle et caméras latérales pouvant englober une zone située à au moins 20 mètres à l'arrière du véhicule.

OBJET DE L'INVENTION

L'invention a pour objet d'améliorer les coûts de fabrication et/ou d'exploitation d'un dispositif de surveillance routière.

RESUME DE L'INVENTION

A cet effet, la revendication 1 prévoit un dispositif de capture optique comprenant :

- un support,
- un premier capteur optique possédant une première cellule sensible apte à acquérir une image présentant une première résolution et une première optique ayant un premier angle de champ centré autour d'un premier axe optique défini par un premier vecteur optique normé et qui définit un premier champ optique de capture
- un deuxième capteur optique possédant une deuxième cellule sensible apte à acquérir une image présentant une deuxième résolution et une deuxième optique ayant un deuxième angle de champ centré autour d'un deuxième axe optique défini par un deuxième vecteur optique normé et qui définit un deuxième champ optique de capture,
- un troisième capteur optique possédant une troisième cellule sensible apte à acquérir une image présentant une troisième résolution et une troisième optique ayant un troisième angle de champ centré autour d'un troisième axe optique défini par un troisième vecteur optique normé et qui définit un troisième champ optique de capture.

Selon l'invention, le troisième angle de champ est supérieur ou égal à soixante pour cent de la somme du premier angle de champ et du deuxième angle de champ et la première résolution et/ou la deuxième résolution est supérieure à la troisième résolution. Le premier capteur optique, le deuxième capteur optique et le troisième capteur optique sont montés sur le support de manière à remplir les conditions suivantes :

- le troisième champ optique comprend au moins une première portion du premier champ optique et au moins une deuxième portion du deuxième champ optique ;
- le premier vecteur normé, le deuxième vecteur normé et le troisième vecteur normé vérifient les relations suivantes :

    a)

[Math 1]

$$\left(\overrightarrow{C1} \wedge \vec{C}\right).\left(\overrightarrow{C2} \wedge \vec{C}\right)) = 0 \quad ou$$

$$abs\left(\frac{\overrightarrow{c1} \wedge \vec{c}}{\|\overrightarrow{c1} \wedge \vec{c}\|} \cdot \frac{\overrightarrow{c2} \wedge \vec{c}}{\|\overrightarrow{c2} \wedge \vec{c}\|}\right) > 0.996$$

b)

[Math 2]

$$\left(\overrightarrow{C2} \wedge \vec{C}\right).\left(\overrightarrow{C3} \wedge \vec{C}\right) = 0 \, ou$$

$$abs\left(\frac{\overrightarrow{c2} \wedge \vec{c}}{\|\overrightarrow{c2} \wedge \vec{c}\|} \cdot \frac{\overrightarrow{c3} \wedge \vec{c}}{\|\overrightarrow{c3} \wedge \vec{c}\|}\right) > 0.996$$

c)

[Math 3]

$$\left(\overrightarrow{C1} \wedge \vec{C}\right).\left(\overrightarrow{C3} \wedge \vec{C}\right) = 0 \, ou$$

$$abs\left(\frac{\overrightarrow{c1} \wedge \vec{c}}{\|\overrightarrow{c1} \wedge \vec{c}\|} \cdot \frac{\overrightarrow{c3} \wedge \vec{c}}{\|\overrightarrow{c3} \wedge \vec{c}\|}\right) > 0.996$$

avec

[Math 4]

$$\vec{C} = \frac{\overrightarrow{C1} + \overrightarrow{C2} + \overrightarrow{C3}}{\|\overrightarrow{C1} + \overrightarrow{C2} + \overrightarrow{C3}\|}$$

dans lequel

C est un vecteur optique normé résultant correspondant à la somme du premier vecteur normé, du deuxième vecteur normé et du troisième vecteur normé ;
C1 est le premier vecteur normé
C2 est deuxième vecteur normé
C3 est troisième vecteur normé
La revendication 12 prévoit un procédé de génération d'une image de surveillance routière à l'aide d'un dispositif selon la revendication 1.

Ainsi, le dispositif de l'invention permet la capture d'une image grand angle et de basse résolution (fournie par le troisième capteur) dans laquelle peuvent être rapportées par assemblage des images à angle de champ faible et de haute résolution (fournies par le premier capteur et/ou le deuxième capteur) . La combinaison de capteurs utilisée dans le dispositif de l'invention est moins onéreuse et plus fiable qu'un capteur grand angle à haute résolution qui couvrirait le même champ avec une résolution élevée sur l'ensemble du champ.

Les temps de traitement et les ressources de traitement d'image sont réduites lorsque la première cellule sensible comprend une pluralité de premiers éléments de captation lumineuse arrangés selon une pluralité de premières lignes s'étendant parallèlement à une première direction définie par un premier vecteur de lignes normé. La deuxième cellule sensible comprend une pluralité de deuxièmes éléments de captation lumineuse arrangés selon une pluralité de deuxièmes lignes s'étendant parallèlement à une deuxième direction définie par un deuxième vecteur de lignes normé. La troisième cellule sensible comprend une pluralité de troisièmes éléments de captation lumineuse arrangés selon une pluralité de troisièmes lignes s'étendant parallèlement à une troisième direction définie par un troisième vecteur de lignes normé. Le premier capteur optique, le deuxième capteur optique et le troisième capteur optique sont montés sur le support de manière à également remplir les conditions suivantes :

- le premier vecteur de lignes normé, le deuxième vecteur de lignes normé et le troisième vecteur de lignes normé vérifient les relations suivantes :

d)

[Math 5]

$$abs\left(\frac{\overrightarrow{C1} \wedge \overrightarrow{H1}}{\|\overrightarrow{C1} \wedge \overrightarrow{H1}\|} \cdot \frac{\overrightarrow{C2} \wedge \overrightarrow{H2}}{\|\overrightarrow{C2} \wedge \overrightarrow{H2}\|}\right) > 0.996$$

e)

[Math 6]

$$abs\left(\frac{\overrightarrow{C1} \wedge \overrightarrow{H1}}{\|\overrightarrow{C1} \wedge \overrightarrow{H1}\|} \cdot \frac{\overrightarrow{C3} \wedge \overrightarrow{H3}}{\|\overrightarrow{C3} \wedge \overrightarrow{H3}\|}\right) > 0.996$$

f)

[Math 7]

$$abs\left(\frac{\overrightarrow{C2} \wedge \overrightarrow{H2}}{\|\overrightarrow{C2} \wedge \overrightarrow{H2}\|} \cdot \frac{\overrightarrow{C3} \wedge \overrightarrow{H3}}{\|\overrightarrow{C3} \wedge \overrightarrow{H3}\|}\right) > 0.996$$

dans lequel

H1 est le premier vecteur de lignes normé
H2 est le deuxième vecteur de lignes normé
H3 est le troisième vecteur de lignes normé.
Note : Les axes optiques des caméras sont par définition non parallèles aux capteurs et donc les vecteur $\overrightarrow{Ci}$ sont non colinéaires à $\overrightarrow{Hi}$

L'assemblage des images capturées est rapide et fiable lorsque le premier capteur optique et le deuxième capteur optique sont positionnés l'un par rapport à l'autre sur le support de manière à ce que l'angle formé par le premier axe optique et le deuxième axe optique vérifie la relation suivante :

[Math 8]

$$\Delta_{O1O2} \leq [(\alpha_1 + \alpha_2) / 2] - R$$

dans lequel

$\Delta_{O1O2}$ est l'angle formé par le premier axe optique et le deuxième axe optique en degrés ;
$\alpha_1$ est le premier angle de champ en degrés ;
$\alpha_2$ est le deuxième angle de champ en degrés ;

R est un angle de recouvrement optique strictement positif, avantageusement compris entre cinq pour cent et trente pour cent du plus grand angle parmi le premier angle de champ $\alpha_1$ est et le deuxième angle de champ $\alpha_2$. Le champ d'observation total du dispositif de capture de l'invention est élargi lorsqu'il comprend un quatrième capteur optique qui possède une quatrième cellule sensible et une quatrième optique ayant un quatrième angle de champ centré autour d'un quatrième axe optique orienté selon un quatrième vecteur optique normé, et qui est monté sur le support de manière à remplir les conditions suivantes :

- le troisième angle de champ est supérieur ou égal à soixante pour cent de la somme du premier angle de champ du deuxième angle de champ et du quatrième angle de champ ;

- le troisième champ optique comprend au moins une quatrième portion du quatrième champ optique ;

le quatrième vecteur optique vérifie les relations suivantes :

d)

[Math 9]

$$\left(\overrightarrow{C1} \wedge \vec{C'}\right).\left(\overrightarrow{C4} \wedge \vec{C'}\right) = 0 \ ou$$

$$abs\left(\frac{\overrightarrow{C1} \wedge \overrightarrow{C'}}{\left\|\overrightarrow{C1} \wedge \overrightarrow{C'}\right\|} \cdot \frac{\overrightarrow{C4} \wedge \overrightarrow{C'}}{\left\|\overrightarrow{C4} \wedge \overrightarrow{C'}\right\|}\right) > \ 0.996$$

e)

[Math 10]

$$\left(\overrightarrow{C2} \wedge \overrightarrow{C'}\right).\left(\overrightarrow{C4} \wedge \vec{C'}\right) = 0 ou$$

$$abs\left(\frac{\overrightarrow{C2} \wedge \overrightarrow{C'}}{\left\|\overrightarrow{C2} \wedge \overrightarrow{C'}\right\|} \cdot \frac{\overrightarrow{C4} \wedge \overrightarrow{C'}}{\left\|\overrightarrow{C4} \wedge \overrightarrow{C'}\right\|}\right) > \ 0.996$$

f)

[Math 11]

$$\left(\overrightarrow{C3} \wedge \overrightarrow{C'}\right).\left(\overrightarrow{C4} \wedge \overrightarrow{C'}\right) = 0 \ ou$$

$$abs\left(\frac{\overrightarrow{C3} \wedge \overrightarrow{C'}}{\left\|\overrightarrow{C3} \wedge \overrightarrow{C'}\right\|} \cdot \frac{\overrightarrow{C4} \wedge \overrightarrow{C'}}{\left\|\overrightarrow{C4} \wedge \overrightarrow{C'}\right\|}\right) > \ 0.996$$

avec

[Math 12]

$$\vec{C'} = \frac{\overrightarrow{C1} + \overrightarrow{C2} + \overrightarrow{C3} + \overrightarrow{C4}}{\left\|\overrightarrow{C1} + \overrightarrow{C2} + \overrightarrow{C3} + \overrightarrow{C4}\right\|}$$

dans lequel C4 est le quatrième vecteur optique normé (C4).

Pour un tel dispositif, l'assemblage d'image est rapide et fiable lorsque le premier axe optique, le deuxième axe optique et le quatrième axe optique sont sécants en un même point.
L'assemblage des images capturées est encore amélioré lorsque le troisième axe optique est sensiblement parallèle au centre de l'union des champs du premier axe optique, deuxième axe optique, et quatrième axe optique.
Avantageusement, le premier capteur optique et/ou le deuxième capteur optique ont respectivement un premier angle de champ optique et/ou un deuxième angle de champ optique compris entre cinq et vingt degrés.
La réalisation du dispositif de l'invention est plus économique lorsque le support est un support monobloc.
La capture de scènes comprenant des objets en mouvement est facilitée lorsque le premier capteur optique et/ou le deuxième capteur optique est de type à obturateur global. La fabrication du dispositif est économique lorsque le premier capteur optique comprend une lentille montée sur une monture déplaçable par rapport à une cellule sensible du capteur optique, le support comprenant des moyens de liaison élastique du support à la monture.
L'invention se rapporte également à un dispositif de surveillance routière comprenant un dispositif de capture optique tel que défini ci-dessus et un procédé de génération d'une image de surveillance routière à l'aide d'un dispositif tel que défini ci-dessus, comprenant l'acquisition d'une première image d'une route, d'une deuxième image de la route et d'une troisième image de la route par, respectivement, la première, la deuxième et la troisième cellule sensible du dispositif de capture optique (90) du dispositif de surveillance routière et l'intégration, dans la troisième image de la route, de la première image de la route et/ou de la deuxième image de la route.

D'autres caractéristiques et avantages de l'invention ressortiront à la lecture de la description qui suit de modes de réalisation particuliers non limitatifs de l'invention.

BREVE DESCRIPTION DES DESSINS

[Fig. 1] la figure 1 est une vue schématique en coupe du dispositif de capture optique selon l'invention ;
[Fig. 2] la figure 2 est une vue schématique des axes et angle de champs optiques du dispositif de la figure 1 ;

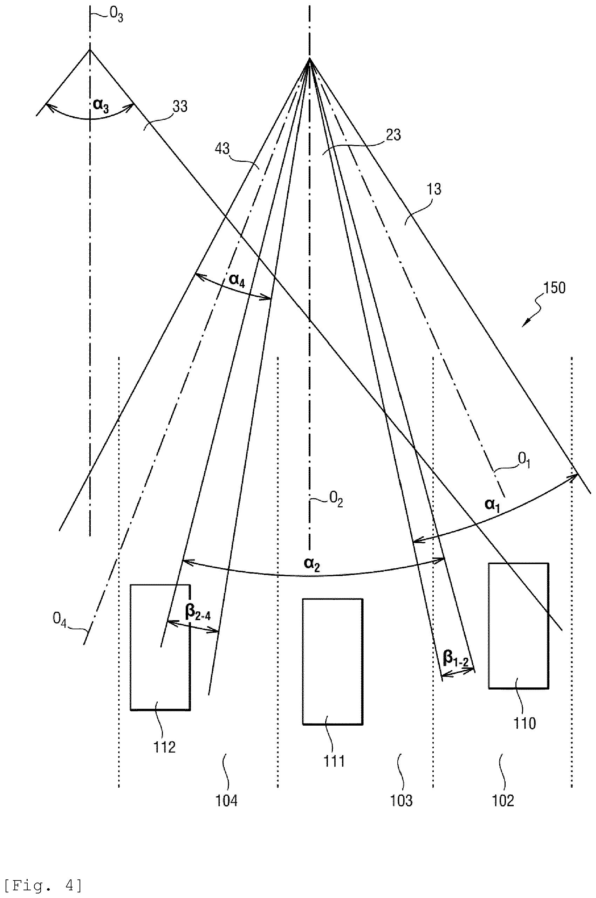

[Fig. 3] la figure 3 est une vue schématique d'une capture d'une scène par le dispositif de la figure 1 ;
[Fig. 4] la figure 4 est une vue schématique d'une première image capturée par le dispositif de la figure 1 ;
[Fig. 5] la figure 5 est une vue schématique d'une deuxième image capturée par le dispositif de la figure 1 ;
[Fig. 6] la figure 6 est une vue schématique d'une troisième image capturée par le dispositif de la figure 1 ;
[Fig. 7] la figure 7 est une vue schématique d'une quatrième image capturée par le dispositif de la figure 1.

DESCRIPTION DETAILLEE DE L'INVENTION

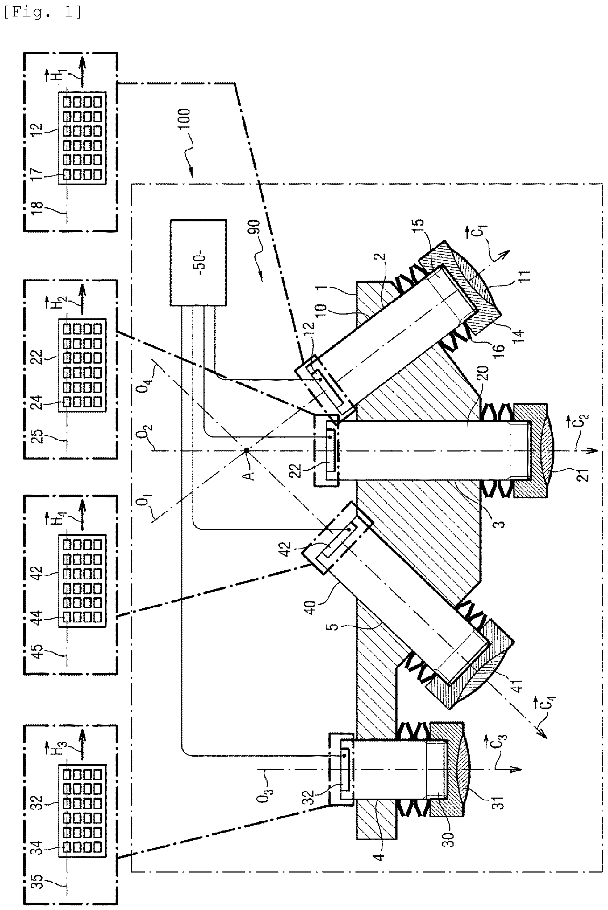

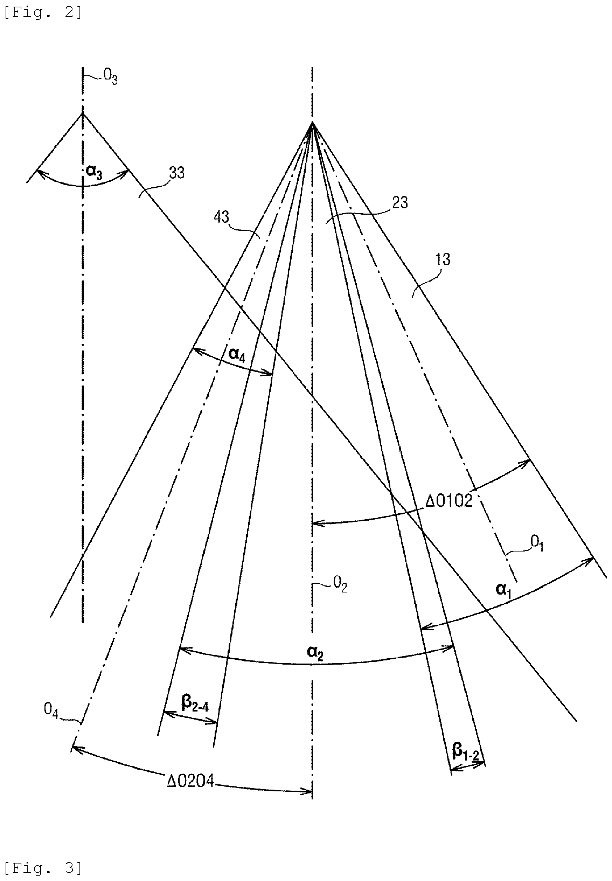

En référence aux figures 1 et 2, le dispositif de capture optique selon l'invention et généralement désigné 90, comprend un support 1 monobloc comprenant un premier logement 2, un deuxième logement 3, un troisième logement 4 et un quatrième logement 5. Le premier logement 2 accueille un premier capteur optique 10 possédant un premier angle de champ $\alpha_1$ égal à treize degrés centré autour d'un premier axe optique O1. Le premier axe optique O1 est orienté selon un premier vecteur optique normé C1.

Le premier capteur optique 10 possède une première lentille 11 et une première cellule sensible 12, ici de type CMOS-à obturateur global, possédant ici cinq mégapixels et qui est reliée à une unité de traitement 50. La première cellule sensible 12 comprend une pluralité de premiers éléments de captation lumineuse 17 arrangés selon une pluralité de premières lignes 18 s'étendant parallèlement à une première direction définie par un premier vecteur de lignes normé H1. Le premier capteur optique 10 définit un premier champ optique de capture 13.

Le deuxième logement 3 accueille un deuxième capteur optique 20 possédant un deuxième angle de champ $\alpha_2$ égal à treize degrés centré autour d'un deuxième axe optique O2. Le deuxième axe optique O2 est orienté selon un deuxième vecteur optique normé C2. Le deuxième capteur optique 20 possède une deuxième lentille 21 et une deuxième cellule sensible 22, ici de type CMOS à obturateur global, possédant ici cinq mégapixels et qui est reliée à l'unité de traitement 50. La deuxième cellule sensible 22 comprend une pluralité de deuxièmes éléments de captation lumineuse 24 arrangés selon une pluralité de deuxièmes lignes 25 s'étendant parallèlement à une deuxième direction définie par un deuxième vecteur de lignes norméH2. Le deuxième capteur optique 20 définit un deuxième champ optique de capture 23.

Le troisième logement 4 accueille un troisième capteur optique 30 possédant un troisième angle de champ $\alpha_3$ égal à quarante degrés centré autour d'un troisième axe optique O3. Le troisième axe optique O3 est orienté selon un troisième vecteur optique normé C3.

Le troisième capteur optique 30 possède une troisième lentille 31 et une troisième cellule sensible 32, ici de type CMOS à obturateur global possédant trois mégapixels et qui est reliée à l'unité de traitement 50. La troisième cellule sensible 32 comprend une pluralité de troisièmes éléments de captation lumineuse 34 arrangés selon une pluralité de troisièmes lignes 35 s'étendant parallèlement à une troisième direction définie par un troisième vecteur de lignes normé H3. Le troisième capteur optique 30 définit un troisième champ de capture 33.

Le quatrième logement 5 accueille un quatrième capteur optique 40 possédant un quatrième angle de champ $\alpha_4$ égal à treize degrés centré autour d'un quatrième axe optique O4. Le quatrième axe optique O4 est orienté selon un quatrième vecteur optique normé C4.

Le quatrième capteur optique 40 possède une quatrième lentille 41 et une quatrième cellule sensible 42, ici de type CMOS à obturateur global, possédant cinq mégapixels et qui est reliée à l'unité de traitement 50. La quatrième cellule sensible 42 comprend une pluralité de quatrièmes éléments de captation lumineuse 44 arrangés selon une pluralité de quatrièmes lignes 45 s'étendant parallèlement à une quatrième direction définie par un quatrième vecteur de lignes norméH4. Le quatrième capteur optique 40 définit un quatrième champ de capture 43.

Les lentilles 11, 21, 31, 41 sont montées sur le support 1 pour être déplaçable le long de l'axe optique de manière à permettre de placer le foyer de la lentille à la surface de la cellule sensible. Une telle opération de réglage de la focalisation est connue en elle-même. La première lentille 11 est ici montée sur une bague taraudée 14 engagée sur un fût fileté 15 s'étendant en saillie d'une surface frontale du support 1. Des rondelles élastiques 16 de type Belleville sont interposées entre ladite surface frontale et une extrémité de la bague taraudée 14 pour compenser les jeux de montage de la bague taraudée 14 sur le fût fileté 15. Les deuxième, troisième et quatrième lentilles 21, 31 et 41sont montées de manière similaire sur le support 1.

Comme visible en figure 2, le premier capteur optique 10, le deuxième capteur optique 20, le troisième capteur optique 30 et le quatrième capteur optique 40 sont montés sur le support 1 de manière à ce que le premier axe optique O1, le deuxième axe optique O2, le troisième axe optique O3 et le quatrième axe optique O4 soient coplanaires. Comme également visible en figure 2, le premier capteur optique 10, le deuxième capteur optique 20 et le quatrième capteur optique 40 sont montés sur le support de manière à ce que le premier axe optique O1, le deuxième axe optique O2 et le quatrième axe optique O4 soient sécants en un même point A.

Pratiquement, le dispositif de capture optique 90 continue de procurer une performance avantageuse lorsque le premier capteur optique 10, le deuxième capteur optique 20, le troisième capteur optique 30 et le quatrième capteur optique 40 sont montés sur le support 1 de manière à ce que le premier vecteur optique normé C1, le deuxième vecteur optique normé C2 et le troisième vecteur normé C3 vérifient les relations suivantes :

a)

[Math 1]

$$\overrightarrow{C2} \wedge \overrightarrow{C\prime} = \vec{0} \ ou$$
$$abs\left(\frac{\overrightarrow{c1} \wedge \overrightarrow{c\prime}}{\|\overrightarrow{c1} \wedge \overrightarrow{c\prime}\|} \cdot \frac{\overrightarrow{c2} \wedge \overrightarrow{c\prime}}{\|\overrightarrow{c2} \wedge \overrightarrow{c\prime}\|}\right) > 0.996$$

b)

[Math 2]

$$\left(\overrightarrow{C2} \wedge \overrightarrow{C\prime}\right) . \left(\overrightarrow{C3} \wedge \overrightarrow{C\prime}\right) = 0 \ ou$$
$$abs\left(\frac{\overrightarrow{c2} \wedge \overrightarrow{c\prime}}{\|\overrightarrow{c2} \wedge \overrightarrow{c\prime}\|} \cdot \frac{\overrightarrow{c3} \wedge \overrightarrow{c\prime}}{\|\overrightarrow{c3} \wedge \overrightarrow{c\prime}\|}\right) > 0.996$$

c)

[Math 3]

$$\overrightarrow{C3} \wedge \overrightarrow{C\prime} = \vec{0} \ ou$$
$$abs\left(\frac{\overrightarrow{c1} \wedge \overrightarrow{c\prime}}{\|\overrightarrow{c1} \wedge \overrightarrow{c\prime}\|} \cdot \frac{\overrightarrow{c3} \wedge \overrightarrow{c\prime}}{\|\overrightarrow{c3} \wedge \overrightarrow{c\prime}\|}\right) > 0.996$$

d)

[Math 9]

$$abs\left(\frac{\overrightarrow{c1} \wedge \overrightarrow{c\prime}}{\|\overrightarrow{c1} \wedge \overrightarrow{c\prime}\|} \cdot \frac{\overrightarrow{c4} \wedge \overrightarrow{c\prime}}{\|\overrightarrow{c4} \wedge \overrightarrow{c\prime}\|}\right) > 0.996$$

e)

[Math 10]

$$\left(\overrightarrow{C2} \wedge \overrightarrow{C\prime}\right) . \left(\overrightarrow{C4} \wedge \overrightarrow{C\prime}\right) = 0 \ ou$$
$$abs\left(\frac{\overrightarrow{c2} \wedge \overrightarrow{c\prime}}{\|\overrightarrow{c2} \wedge \overrightarrow{c\prime}\|} \cdot \frac{\overrightarrow{c4} \wedge \overrightarrow{c\prime}}{\|\overrightarrow{c4} \wedge \overrightarrow{c\prime}\|}\right) > 0.996$$

f)

[Math 11]

$$\overrightarrow{C3} \wedge \overrightarrow{C\prime} = \vec{0} \ ou$$

$$abs\left(\frac{\overrightarrow{c3} \wedge \overrightarrow{c\prime}}{\|\overrightarrow{c3} \wedge \overrightarrow{c\prime}\|} \cdot \frac{\overrightarrow{c4} \wedge \overrightarrow{c\prime}}{\|\overrightarrow{c4} \wedge \overrightarrow{c\prime}\|}\right) > 0.996$$

avec

[Math 12]

$$\overrightarrow{C\prime} = \frac{\overrightarrow{C1} + \overrightarrow{C2} + \overrightarrow{C3} + \overrightarrow{C4}}{\|\overrightarrow{C1} + \overrightarrow{C2} + \overrightarrow{C3} + \overrightarrow{C4}\|}$$

dans lequel

C' est un vecteur optique normé résultant correspondant à la somme du premier vecteur normé, du deuxième vecteur normé, du troisième vecteur normé et du quatrième vecteur normé ;
C1 est le premier vecteur optique normé
C2 est le deuxième vecteur optique normé
C3 est le troisième vecteur optique normé.
C4 est le quatrième vecteur optique normé.

L'opérateur « . » qui combine les vecteurs issus des divers produits vectoriel est l'opérateur « produit scalaire ».L'opérateur « ‖ ⋯ ‖ » est l'opérateur de calcul de la norme d'un vecteur.

Le premier capteur optique 10, le deuxième capteur optique 20, le troisième capteur optique 30 et le quatrième capteur optique 40 sont, ici, montés sur le support 1 de manière à ce que le troisième champ optique 33 englobe le premier champ optique 13, le deuxième champ optique 23 et le quatrième champ optique 43.

Comme visible en figures 1 et 2, le troisième axe optique O3 et le deuxième axe optique O2 sont, ici, parallèles.

Le premier capteur optique 10 et le deuxième capteur optique 20 sont également positionnés l'un par rapport à l'autre sur le support 1 de manière à ce que le premier champ de capture 13 réalise un recouvrement $\beta_{1\text{-}2}$ du deuxième champ de capture 23 au moins égal à trois degrés.

Ceci se traduit par la relation suivante entre l'angle $\Delta_{O1O2}$ formé par le premier axe optique O1 et le deuxième axe optique O2 :

[Math 8]

$$\Delta_{O1O2} \le [(\alpha_1 + \alpha_2) / 2] - R$$

dans lequel

$\Delta_{O1O2}$ est l'angle formé par le premier axe optique O1 et le deuxième axe optique O2 en degrés ;
$\alpha_1$ est le premier angle de champ en degrés ;
$\alpha_2$ est le deuxième angle de champ en degrés ;
R1 est un premier angle de recouvrement optique, ici égal à trois degrés.

Le deuxième capteur optique 20 et le quatrième capteur optique 40 sont positionnés l'un par rapport à l'autre sur le support 1 de manière à ce que le deuxième champ de capture 23 réalise un recouvrement $\beta_{2\text{-}4}$ du quatrième champ de capture 43 au moins égal à trois degrés.

Ceci se traduit par la relation suivante entre l'angle $\Delta_{O2O4}$ formé par le deuxième axe optique O2 et le quatrième axe optique O4 :

[Math 13]

$$\Delta_{O2O4} \le [(\alpha_4 + \alpha_2) / 2] - R2$$

dans lequel

$\Delta_{O2O4}$ est l'angle formé par le deuxième axe optique O2 et le quatrième axe optique O4 en degrés ;
$\alpha_2$ est le deuxième angle de champ en degrés ;
$\alpha_4$ est le quatrième angle de champ en degrés ;
R2 est un deuxième angle de recouvrement optique, ici égal à trois degrés.

Le fonctionnement du dispositif optique 90 va être décrit dans le cas de son incorporation dans un dispositif 100 de surveillance d'une route 101 comprenant une première voie 102, une deuxième voie 103 et une troisième voie 104. En fonctionnement, l'unité de traitement 50 réalise la capture d'une même scène 150 (ici un premier véhicule 110 sur la première voie 102, un deuxième véhicule 111 sur la deuxième voie 103, un troisième véhicule 112 sur la troisième voie 104) à l'aide du dispositif optique 90.

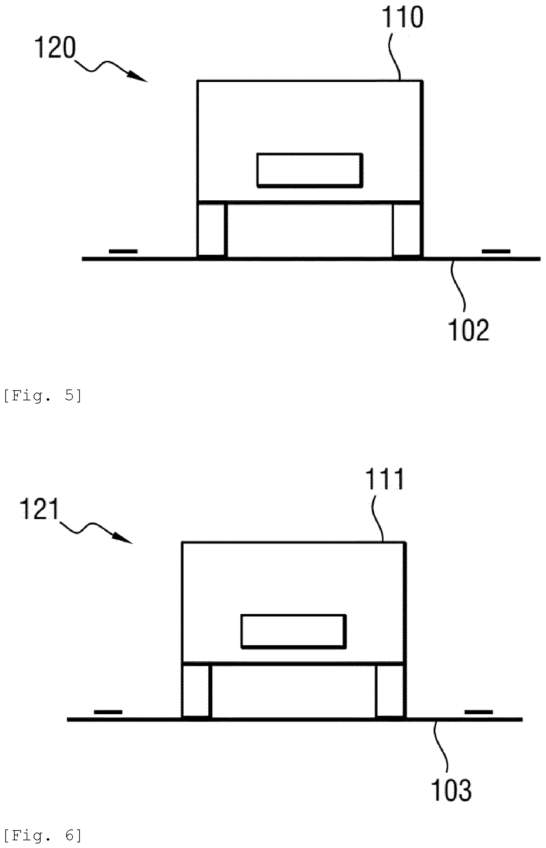

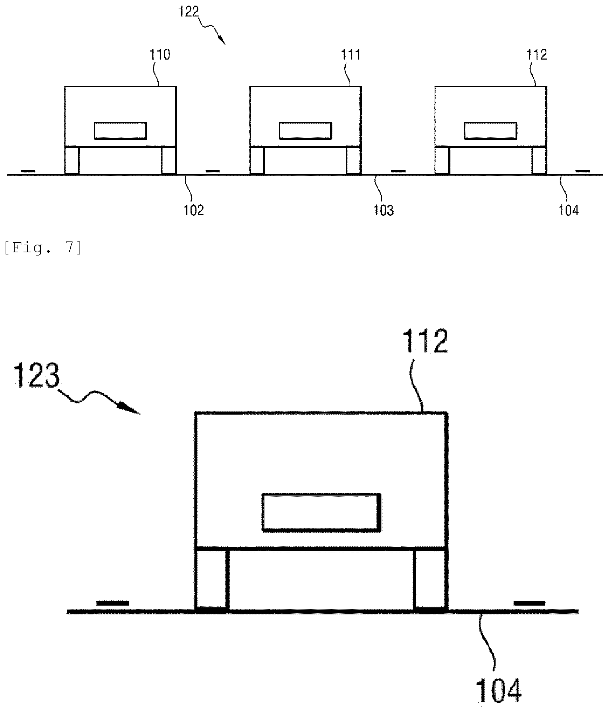

La première cellule sensible 12 génère une première image 120 (figure 4), la deuxième cellule sensible 22 génère une deuxième image 121 (figure 5), la troisième cellule sensible 32 génère une troisième image 122 (figure 6), la quatrième cellule sensible 42 génère une quatrième image 123 (figure 7). Ces images sont enregistrées par l'unité de traitement 50 qui en réalise un assemblage pour obtenir une cinquième image. Les techniques d'assemblage d'image sont connues en elle-même, notamment les techniques regroupées sous le terme anglophone « stitching ». Une analyse automatique de la cinquième image permet d'identifier l'existence d'une situation anormale (franchissement de lignes continue, non-respect d'une distance de sécurité, circulation en contresens ou sur voie d'urgence, etc.), ici on retiendra comme situation anormale le premier véhicule 110 qui circule à contresens.

L'unité de traitement 50 génère alors une sixième image qui résulte de l'assemblage de la première image 120 dans la troisième image 122. Cette sixième image permet de clairement identifier le véhicule 110 car la première image 120 possède une résolution suffisante à cette fin (lecture d'une plaque minéralogique ou reconnaissance du visage du conducteur). La sixième image permet également, en regroupant l'ensemble des éléments de la scène 150, de servir de preuve à la caractérisation de la situation anormale. Le fichier électronique correspondant à la sixième image est de taille réduite par rapport à une capture par un unique capteur à angle de champ large et résolution élevée.

Bien entendu, l'invention n'est pas limitée aux modes de réalisation décrits mais englobe toute variante entrant dans le champ de l'invention telle que définie par les revendications.

En particulier :

- bien qu'ici le premier, deuxième et quatrième capteur possèdent un angle de champ égal à treize degrés, l'invention s'applique également à d'autres types de premier, deuxième et quatrième capteur possédant un angle de champ compris entre cinq et vingt degrés ;
- tout capteur optique est utilisable (technologie, angle de champ, nombre d'éléments sensibles ou pixels, dimensions...). Ainsi, bien qu'ici le premier, deuxième et quatrième capteur soient de type CMOS à obturateur global, l'invention s'applique également à d'autres types de capteurs tels que des capteurs à obturateur ligne par ligne ou CCD ;
- bien que le support soit ici réalisé par usinage d'un bloc métallique, il peut être obtenu par moulage, soudage ou tout autre technologie ou combinaison de technologies permettant l'obtention d'un support monobloc ;
- bien qu'ici le support soit monobloc, il peut être réalisé par assemblage ;
- bien qu'ici le troisième angle de champ soit supérieur de un unique degré à la somme du premier, deuxième et quatrième angle de champ, l'invention s'applique également à un dispositif dans lequel le troisième angle de champ est supérieur ou égal à soixante pour cent de la somme du premier, deuxième et quatrième angle de champ, préférentiellement 100% pour cent et très préférentiellement 120% pour cent de la somme du premier, deuxième et quatrième angle de champ;
- bien qu'ici le dispositif de capture optique comprenne trois capteurs optiques à champ optique réduit et haute résolution- à savoir un premier, deuxième et quatrième capteur optique- et un capteur optique à champ optique large et résolution réduite- à savoir un troisième capteur optique, l'invention s'applique également à un dispositif de capture optique comprenant un nombre différent de capteurs optiques, comme par exemple un dispositif de capture optique comprenant deux capteurs optiques à champ optique réduit et haute résolution couplés avec un capteur optique à champ large ou encore quatre ou plus de quatre capteurs optiques à champ optique réduit et haute résolution combinés avec un, deux ou plus de deux capteur optique à champ large et résolution réduite ;
- bien qu'ici le premier capteur optique, le deuxième capteur optique, le troisième capteur optique et le quatrième capteur optique soient montés sur le support de manière à ce que le troisième champ optique englobe le premier champ optique, le deuxième champ optique et le quatrième champ optique, l'invention s'applique également à un troisième champ optique qui comprend une première portion du premier champ optique et une deuxième portion du deuxième champ optique dans le cas d'un dispositif de capture à deux capteurs à champ réduit et haute résolution, ainsi qu' à un troisième champ optique qui comprend une première portion du premier champ optique, une deuxième portion du deuxième champ optique et une quatrième portion du quatrième champ optique dans le cas d'un dispositif de capture à trois capteurs à champ réduit et haute résolution ;
- bien qu'ici le premier et le deuxième angle de recouvrement soient égaux à trois degrés, l'invention s'applique également à tout autre valeur de l'angle de recouvrement strictement positive, le premier angle de recouvrement et le deuxième angle de recouvrement pouvant être différents.

Bien qu'ici la description traite de modes de réalisation comprenant plusieurs caractéristiques techniques décrites ensemble, celles-ci ne sont pas nécessairement liées entre elles et disposent chacune d'un effet technique qui apporte un avantage spécifique à l'invention, ce qui justifie que les caractéristiques autonomes n'entrainant pas de modifications des autres caractéristiques d'un mode de réalisation puissent être isolément dupliquées d'un mode de réalisation vers l'autre afin de conférer à ce dernier l'avantage spécifique qui lui est lié.

**Revendications**

1.  Dispositif de capture optique (90) comprenant :

    - un support (1) ;
    - un premier capteur optique (10) possédant une première cellule sensible (12) apte à acquérir une première image d'une scène présentant une première résolution et une première optique ayant un premier angle de champ ($\alpha_1$) centré autour d'un premier axe optique (O1) orienté selon un premier vecteur optique normé et qui définit un premier champ optique (13) de capture ;
    - un deuxième capteur optique (20) possédant une deuxième cellule sensible apte à acquérir une deuxième image de la scène présentant une deuxième résolution et une deuxième optique ayant un deuxième angle de champ ($\alpha_2$) centré autour d'un deuxième axe optique (O2) orienté selon un deuxième vecteur optique normé et qui définit un deuxième champ optique (23) de capture ;
    - un troisième capteur optique (30) possédant une troisième cellule sensible apte à acquérir une troisième image de la scène présentant une troisième résolution et une troisième optique ayant un troisième angle de champ ($\alpha_3$) centré autour d'un troisième axe optique (O3) orienté selon un troisième vecteur optique normé et qui définit un troisième champ optique (33) de capture ;

    dans lequel :

    le troisième angle de champ ($\alpha_3$) est supérieur ou égal à soixante pour cent de la somme du premier angle de champ ($\alpha_1$) et du deuxième angle de champ ($\alpha_2$), et la première résolution et/ou la deuxième résolution est supérieure à la troisième résolution;
    le premier capteur optique (10), le deuxième capteur optique (20) et le troisième capteur optique (30) étant montés sur le support (1) de manière à remplir les conditions suivantes :

    - le troisième champ optique (33) comprend au moins une première portion du premier champ optique (13) et au moins une deuxième portion du deuxième champ optique (23) ;
    - le premier vecteur optique normé (C1), le deuxième vecteur optique normé (C2) et le troisième vecteur normé (C3) vérifient les relations suivantes :

        a)

        [Math 1]

        $$\left(\overrightarrow{C1} \wedge \vec{C}\right).\left(\overrightarrow{C2} \wedge \vec{C}\right)) = 0 \quad ou$$
        $$abs\left(\frac{\overrightarrow{c1} \wedge \vec{c}}{\|\overrightarrow{c1} \wedge \vec{c}\|} \cdot \frac{\overrightarrow{c2} \wedge \vec{c}}{\|\overrightarrow{c2} \wedge \vec{c}\|}\right) > \ 0.996$$

        b)

[Math 2]

$$\left(\overrightarrow{C2} \wedge \vec{C}\right).\left(\overrightarrow{C3} \wedge \vec{C}\right) = 0 \; ou$$
$$abs\left(\frac{\overrightarrow{c2} \wedge \vec{c}}{\|\overrightarrow{c2} \wedge \vec{c}\|} \cdot \frac{\overrightarrow{c3} \wedge \vec{c}}{\|\overrightarrow{c3} \wedge \vec{c}\|}\right) > 0.996$$

c)

[Math 3]

$$\left(\overrightarrow{C1} \wedge \vec{C}\right).\left(\overrightarrow{C3} \wedge \vec{C}\right) = 0 \; ou$$
$$abs\left(\frac{\overrightarrow{c1} \wedge \vec{c}}{\|\overrightarrow{c1} \wedge \vec{c}\|} \cdot \frac{\overrightarrow{c3} \wedge \vec{c}}{\|\overrightarrow{c3} \wedge \vec{c}\|}\right) > 0.996$$

avec

avec [Math 4]

$$\vec{C} = \frac{\overrightarrow{C1} + \overrightarrow{C2} + \overrightarrow{C3}}{\|\overrightarrow{C1} + \overrightarrow{C2} + \overrightarrow{C3}\|}$$

dans lequel

C est un vecteur optique normé résultant correspondant à la somme du premier vecteur normé (C1), du deuxième vecteur normé (C2) et du troisième vecteur normé (C3);
C1 est le premier vecteur optique normé (C1)
C2 est le deuxième vecteur optique normé (C2)
C3 est le troisième vecteur optique normé (C3).

2. Dispositif de capture optique (90) selon la revendication 1, dans lequel :

- la première cellule sensible (12) comprend une pluralité de premiers éléments (17) de captation lumineuse arrangés selon une pluralité de premières lignes (18) s'étendant parallèlement à une première direction définie par un premier vecteur de lignes normé (H1),-la deuxième cellule sensible (22) comprend une pluralité de deuxièmes éléments (24) de captation lumineuse arrangés selon une pluralité de deuxièmes lignes (25) s'étendant parallèlement à une deuxième direction définie par un deuxième vecteur de lignes normé (H2) ;-la troisième cellule sensible (32) comprend une pluralité de troisièmes éléments (34) de captation lumineuse arrangés selon une pluralité de troisièmes lignes (35) s'étendant parallèlement à une troisième direction définie par un troisième vecteur de lignes normé (H3),le premier capteur optique (10), le deuxième capteur optique (20) et le troisième capteur optique (30) étant montés sur le support (1) de manière à également remplir les conditions suivantes
- le premier vecteur de lignes normé (H1), le deuxième vecteur de lignes normé (H2) et le troisième vecteur de lignes normé (H3) vérifient les relations suivantes :

d)

[Math 5]

$$abs\left(\frac{\overrightarrow{c1} \wedge \overrightarrow{H1}}{\|\overrightarrow{c1} \wedge \overrightarrow{H1}\|} \cdot \frac{\overrightarrow{c2} \wedge \overrightarrow{H2}}{\|\overrightarrow{c2} \wedge \overrightarrow{H2}\|}\right) > 0.996$$

e)

[Math 6]

$$abs\left(\frac{\overrightarrow{C1} \wedge \overrightarrow{H1}}{\|\overrightarrow{C1} \wedge \overrightarrow{H1}\|} \cdot \frac{\overrightarrow{C3} \wedge \overrightarrow{H3}}{\|\overrightarrow{C3} \wedge \overrightarrow{H3}\|}\right) > 0.996$$

f)

[Math 7]

$$abs\left(\frac{\overrightarrow{C2} \wedge \overrightarrow{H2}}{\|\overrightarrow{C2} \wedge \overrightarrow{H2}\|} \cdot \frac{\overrightarrow{C3} \wedge \overrightarrow{H3}}{\|\overrightarrow{C3} \wedge \overrightarrow{H3}\|}\right) > 0.996$$

dans lequel

H1 est le premier vecteur de lignes normé (H1)
H2 est le deuxième vecteur de lignes normé (H2)
H3 est le troisième vecteur de lignes normé (H3).

3. Dispositif de capture optique (90) selon la revendication 1 ou 2, dans lequel le premier capteur optique (10) et le deuxième capteur optique (20) sont positionnés l'un par rapport à l'autre sur le support (1) de manière à ce que l'angle ($\Delta_{O1O2}$) formé par le premier axe optique (O1) et le deuxième axe optique (O2) vérifie la relation suivante :

[Math 8]

$$\Delta_{O1O2} \leq [(\alpha_1 + \alpha_2) / 2] - R$$

dans lequel

$\Delta_{O1O2}$ est l'angle formé par le premier axe optique (O1) et le deuxième axe optique (O2) en degrés ;
$\alpha_1$ est le premier angle de champ en degrés ;
$\alpha_2$ est le deuxième angle de champ en degrés ;
R est un angle de recouvrement optique strictement positif.

4. Dispositif de capture optique (90) selon la revendication précédente, dans lequel l'angle de recouvrement optique est compris entre cinq pour cent et trente pour cent du plus grand angle parmi le premier angle de champ $\alpha_1$ est et le deuxième angle de champ $\alpha_2$.

5. Dispositif de capture optique (90) selon l'une quelconque des revendications précédentes, comprenant un quatrième capteur optique (40) possédant une quatrième cellule sensible et une quatrième optique ayant un quatrième angle de champ ($\alpha_4$) centré autour d'un quatrième axe optique (O4) orienté selon un quatrième vecteur optique normé, le quatrième capteur optique étant monté sur le support (1) de manière à remplir les conditions suivantes :

- le troisième angle de champ ($\alpha_3$) est supérieur ou égal à soixante pour cent de la somme du premier angle de champ ($\alpha_1$), du deuxième angle de champ ($\alpha_2$) et du quatrième angle de champ ($\alpha_4$) ;
- le troisième champ optique (33) comprend au moins une quatrième portion du quatrième champ optique (43) ; le quatrième vecteur optique (C4) vérifie les relations suivantes :

d)

[Math 9]

$$\left(\overrightarrow{C1} \wedge \vec{C'}\right).\left(\overrightarrow{C4} \wedge \vec{C'}\right) = 0 \; ou$$

$$abs\left(\frac{\overrightarrow{C1} \wedge \overrightarrow{C'}}{\|\overrightarrow{C1} \wedge \overrightarrow{C'}\|} \cdot \frac{\overrightarrow{C4} \wedge \overrightarrow{C'}}{\|\overrightarrow{C4} \wedge \overrightarrow{C'}\|}\right) > 0.996$$

e)

[Math 10]

$$\left(\overrightarrow{C2} \wedge \overrightarrow{C\prime}\right) . \left(\overrightarrow{C4} \wedge \vec{C\prime}\right) = 0 \ ou$$

$$abs\left(\frac{\overrightarrow{C2} \wedge \overrightarrow{C\prime}}{\|\overrightarrow{C2} \wedge \overrightarrow{C\prime}\|} \ \cdot \ \frac{\overrightarrow{C4} \wedge \overrightarrow{C\prime}}{\|\overrightarrow{C4} \wedge \overrightarrow{C\prime}\|}\right) > \ 0.996$$

f)

[Math 11]

$$\left(\overrightarrow{C3} \wedge \overrightarrow{C\prime}\right) . \left(\overrightarrow{C4} \wedge \overrightarrow{C\prime}\right) = 0 \ ou$$

$$abs\left(\frac{\overrightarrow{C3} \wedge \overrightarrow{C\prime}}{\|\overrightarrow{C3} \wedge \overrightarrow{C\prime}\|} \ \cdot \ \frac{\overrightarrow{C4} \wedge \overrightarrow{C\prime}}{\|\overrightarrow{C4} \wedge \overrightarrow{C\prime}\|}\right) > \ 0.996$$

Avec

[Math 12]

$$\overrightarrow{C\prime} = \frac{\overrightarrow{C1} + \overrightarrow{C2} + \overrightarrow{C3} + \overrightarrow{C4}}{\|\overrightarrow{C1} + \overrightarrow{C2} + \overrightarrow{C3} + \overrightarrow{C4}\|}$$

dans lequel
C4 est le quatrième vecteur optique normé (C4)

6. Dispositif de capture optique (90) selon la revendication 3, dans lequel le premier axe optique (O1), le deuxième axe optique (O2) et le quatrième axe optique (O4) sont sécants en un même point (A).

7. Dispositif de capture optique (90) selon l'une quelconque des revendications précédentes, dans lequel le premier capteur optique (10) et/ou le deuxième capteur optique (20) ont respectivement un premier angle de champ optique ($\alpha_1$) et/ou un deuxième angle de champ optique ($\alpha_2$) compris entre cinq et vingt degrés.

8. Dispositif de capture optique (90) selon l'une quelconque des revendications précédentes, dans lequel le support (1) est un support (1) monobloc.

9. Dispositif de capture optique (90) selon l'une quelconque des revendications précédentes, dans lequel le premier capteur optique (10) et/ou le deuxième capteur optique (20) est de type à obturateur global.

10. Dispositif de capture optique (90) selon l'une quelconque des revendications précédentes, dans lequel le premier capteur optique (10) comprend une lentille (11) montée sur une monture déplaçable par rapport à une cellule sensible (12) du capteur optique (10), le support (1) comprenant des moyens de liaison élastique (16) du support (1) à la monture (14).

11. Dispositif de surveillance routière (100) comprenant un dispositif de capture optique (90) selon l'une quelconque des revendications précédentes.

12. Procédé de génération d'une image de surveillance routière, comprenant les étapes suivantes :

- acquisition d'une première image d'une route, d'une deuxième image de la route et d'une troisième image de la route par, respectivement, la première, la deuxième et la troisième cellule sensible du dispositif de capture optique (90) du dispositif de surveillance routière selon la revendication 11 ;
- intégration, dans la troisième image de la route, de la première image de la route et/ou de la deuxième image de la route.

**Patentansprüche**

1.  Optische Erfassungsvorrichtung (90) mit:

    - einem Träger (1);
    - einem ersten optischen Sensor (10), der eine erste Sensorzelle (12) besitzt, die ein erstes Bild einer Szene mit einer ersten Auflösung erfassen kann, und einer ersten Optik mit einem ersten Bildwinkel ($\alpha_1$), der um eine erste optische Achse (O1) zentriert ist, die gemäß einem ersten normierten optischen Vektor ausgerichtet ist und ein erstes optisches Erfassungsfeld (13) definiert;
    - einem zweiten optischen Sensor (20), der eine zweite Sensorzelle besitzt, die ein zweites Bild der Szene mit einer zweiten Auflösung erfassen kann, und einer zweiten Optik mit einem zweiten Bildwinkel ($\alpha_2$), der um eine zweite optische Achse (O2) zentriert ist, die gemäß einem zweiten normierten optischen Vektor ausgerichtet ist und ein zweites optisches Erfassungsfeld (23) definiert;
    - einem dritten optischen Sensor (30), der eine dritte Sensorzelle besitzt, die ein drittes Bild der Szene mit einer dritten Auflösung erfassen kann, und einer dritten Optik mit einem dritten Bildwinkel ($\alpha_3$), der um eine dritte optische Achse (O3) zentriert ist, die gemäß einem dritten normierten optischen Vektor ausgerichtet ist und ein drittes optisches Erfassungsfeld (33) definiert;

    wobei:

    der dritte Bildwinkel ($\alpha_3$) größer oder gleich sechzig Prozent der Summe des ersten Bildwinkels ($\alpha_1$) und des zweiten Bildwinkels ($\alpha_2$) ist, und die erste Auflösung und/oder die zweite Auflösung größer als die dritte Auflösung ist;

    der erste optische Sensor (10), der zweite optische Sensor (20) und der dritte optische Sensor (30) auf dem Träger (1) so angebracht sind, dass sie die folgenden Bedingungen erfüllen:

    - das dritte optische Feld (33) weist mindestens einen ersten Abschnitt des ersten optischen Feldes (13) und mindestens einen zweiten Abschnitt des zweiten optischen Feldes (23) auf;
    - der erste normierte optische Vektor (C1), der zweite normierte optische Vektor (C2) und der dritte normierte Vektor (C3) erfüllen die folgenden Gleichungen:

    a)

    [Math 1]

    $$\left( \overrightarrow{C1} \wedge \vec{C} \right) \cdot \left( \overrightarrow{C2} \wedge \vec{C} \right) = 0 \; oder$$
    $$abs\left( \frac{\overrightarrow{C1} \wedge \vec{C}}{\|\overrightarrow{C1} \wedge \vec{C}\|} \cdot \frac{\overrightarrow{C2} \wedge \vec{C}}{\|\overrightarrow{C2} \wedge \vec{C}\|} \right) > 0,996$$

    b)

    [Math 2]

    $$\left( \overrightarrow{C2} \wedge \vec{C} \right) \cdot \left( \overrightarrow{C3} \wedge \vec{C} \right) = 0 \; oder$$
    $$abs\left( \frac{\overrightarrow{C2} \wedge \vec{C}}{\|\overrightarrow{C2} \wedge \vec{C}\|} \cdot \frac{\overrightarrow{C3} \wedge \vec{C}}{\|\overrightarrow{C3} \wedge \vec{C}\|} \right) > 0,996$$

    c)

[Math 3]

$$\left(\overrightarrow{C1} \wedge \vec{C}\right) \cdot \left(\overrightarrow{C3} \wedge \vec{C}\right) = 0 \; oder$$

$$abs\left(\frac{\overrightarrow{C1} \wedge \vec{C}}{\|\overrightarrow{C1} \wedge \vec{C}\|} \cdot \frac{\overrightarrow{C3} \wedge \vec{C}}{\|\overrightarrow{C3} \wedge \vec{C}\|}\right) > 0{,}996$$

mit

[Math 4]

$$\vec{C} = \frac{\overrightarrow{C1} + \overrightarrow{C2} + \overrightarrow{C3}}{\|\overrightarrow{C1} + \overrightarrow{C2} + \overrightarrow{C3}\|}$$

wobei

C ein resultierender normierter optischer Vektor ist, der der Summe des ersten normierten Vektors (C1), des zweiten normierten Vektors (C2) und des dritten normierten Vektors (C3) entspricht;
C1 der erste normierte optische Vektor (C1) ist;
C2 der zweite normierte optische Vektor (C2) ist;
C3 der dritte normierte optische Vektor (C3) ist.

**2.** Optische Erfassungsvorrichtung (90) nach Anspruch 1, wobei:

- die erste Sensorzelle (12) eine Vielzahl von ersten Lichterfassungselementen (17) aufweist, die in einer Vielzahl von ersten Linien (18) angeordnet sind, die sich parallel zu einer ersten Richtung erstrecken, die durch einen ersten normierten Linienvektor (H1) definiert ist,
- die zweite Sensorzelle (22) eine Vielzahl von zweiten Lichterfassungselementen (24) aufweist, die in einer Vielzahl von zweiten Linien (25) angeordnet sind, die sich parallel zu einer zweiten Richtung erstrecken, die durch einen zweiten normierten Linienvektor (H2) definiert ist,
- die dritte Sensorzelle (32) eine Vielzahl von dritten Lichterfassungselementen (34) aufweist, die in dritten Vielzahl von dritten Linien (35) angeordnet sind, die sich parallel zu einer dritten Richtung erstrecken, die durch einen dritten normierten Linienvektor (H3) definiert ist,

wobei der erste optische Sensor (10), der zweite optische Sensor (20) und der dritte optische Sensor (30) auf dem Träger (1) so angebracht sind, dass sie ebenfalls die folgenden Bedingungen erfüllen:

- der erste normierte Linienvektor (H1), der zweite normierte Linienvektor (H2) und der dritte normierte Linienvektor (H3) erfüllen die folgenden Gleichungen:

d)

[Math 5]

$$abs\left(\frac{\overrightarrow{C1} \wedge \overrightarrow{H1}}{\|\overrightarrow{C1} \wedge \overrightarrow{H1}\|} \cdot \frac{\overrightarrow{C2} \wedge \overrightarrow{H2}}{\|\overrightarrow{C2} \wedge \overrightarrow{H2}\|}\right) > 0{,}996$$

e)

[Math 6]

$$abs\left(\frac{\overrightarrow{C1} \wedge \overrightarrow{H1}}{\|\overrightarrow{C1} \wedge \overrightarrow{H1}\|} \cdot \frac{\overrightarrow{C3} \wedge \overrightarrow{H3}}{\|\overrightarrow{C3} \wedge \overrightarrow{H3}\|}\right) > 0{,}996$$

f)

[Math 7]

$$abs\left(\frac{\overrightarrow{C2} \wedge \overrightarrow{H2}}{\left\|\overrightarrow{C2} \wedge \overrightarrow{H2}\right\|} \cdot \frac{\overrightarrow{C3} \wedge \overrightarrow{H3}}{\left\|\overrightarrow{C3} \wedge \overrightarrow{H3}\right\|}\right) > 0{,}996$$

wobei

H1 der erste normierte Linienvektor (H1) ist;
H2 der zweite normierte Linienvektor (H2) ist;
H3 der dritte normierte Linienvektor (H3) ist.

3. Optische Erfassungsvorrichtung (90) nach Anspruch 1 oder 2, wobei der erste optische Sensor (10) und der zweite optische Sensor (20) relativ zueinander auf dem Träger (1) so positioniert sind, dass der Winkel ($\Delta_{O1O2}$), der durch die erste optische Achse (O1) und die zweite optische Achse (O2) gebildet wird, die folgende Gleichung erfüllt:

[Math 8]

$$\Delta_{O1O2} \leq [(\alpha_1 + \alpha_2) / 2] - R$$

wobei

$\Delta_{O1O2}$ der Winkel ist, der von der ersten optischen Achse (O1) und der zweiten optischen Achse (O2) in Grad gebildet wird;
$\alpha_1$ der erste Blickwinkel in Grad ist;
$\alpha_2$ der zweite Blickwinkel in Grad ist;
R ein strikt positiver optischer Überlappungswinkel ist.

4. Optische Erfassungsvorrichtung (90) nach dem vorhergehenden Anspruch, wobei der optische Überlappungswinkel zwischen fünf Prozent und dreißig Prozent des größten Winkels aus dem ersten Blickwinkel $\alpha_1$ und dem zweiten Blickwinkel $\alpha_2$ beträgt.

5. Optische Erfassungsvorrichtung (90) nach einem der vorhergehenden Ansprüche, die einen vierten optischen Sensor (40) mit einer vierten Sensorzelle und einer vierten Optik mit einem vierten Blickwinkel ($\alpha_4$) aufweist, der um eine vierte optische Achse (O4) zentriert ist, die gemäß einem vierten normierten optischen Vektor ausgerichtet ist, wobei der vierte optische Sensor auf dem Träger (1) so angebracht ist, dass er die folgenden Bedingungen erfüllt:

- der dritte Bildwinkel ($\alpha_3$) ist größer oder gleich sechzig Prozent der Summe des ersten Bildwinkels ($\alpha_1$), des zweiten Bildwinkels ($\alpha_2$) und des dritten Blickwinkels ($\alpha_4$);
- das dritte optische Feld (33) weist mindestens einen vierten Abschnitt des vierten optischen Feldes (43) auf;
- der vierte optische Vektor (C4) erfüllt die folgenden Gleichungen:

d)

[Math 9]

$$\left(\overrightarrow{C1} \wedge \overrightarrow{C'}\right) \cdot \left(\overrightarrow{C4} \wedge \overrightarrow{C'}\right) = 0 \; oder$$

$$abs\left(\frac{\overrightarrow{C1} \wedge \overrightarrow{C'}}{\left\|\overrightarrow{C1} \wedge \overrightarrow{C'}\right\|} \cdot \frac{\overrightarrow{C4} \wedge \overrightarrow{C'}}{\left\|\overrightarrow{C4} \wedge \overrightarrow{C'}\right\|}\right) > 0{,}996$$

e)

[Math 10]

$$\left(\overrightarrow{C2} \wedge \overrightarrow{C'}\right) \cdot \left(\overrightarrow{C4} \wedge \overrightarrow{C'}\right) = 0 \ oder$$

$$abs\left(\frac{\overrightarrow{C2} \wedge \overrightarrow{C'}}{\left\|\overrightarrow{C2} \wedge \overrightarrow{C'}\right\|} \cdot \frac{\overrightarrow{C4} \wedge \overrightarrow{C'}}{\left\|\overrightarrow{C4} \wedge \overrightarrow{C'}\right\|}\right) > 0,996$$

f)

[Math 11]

$$\left(\overrightarrow{C3} \wedge \overrightarrow{C'}\right) \cdot \left(\overrightarrow{C4} \wedge \overrightarrow{C'}\right) = 0 \ oder$$

$$abs\left(\frac{\overrightarrow{C3} \wedge \overrightarrow{C'}}{\left\|\overrightarrow{C3} \wedge \overrightarrow{C'}\right\|} \cdot \frac{\overrightarrow{C4} \wedge \overrightarrow{C'}}{\left\|\overrightarrow{C4} \wedge \overrightarrow{C'}\right\|}\right) > 0,996$$

mit

[Math 12]

$$\overrightarrow{C'} = \frac{\overrightarrow{C1} + \overrightarrow{C2} + \overrightarrow{C3} + \overrightarrow{C4}}{\left\|\overrightarrow{C1} + \overrightarrow{C2} + \overrightarrow{C3} + \overrightarrow{C4}\right\|}$$

wobei
C4 der vierte normierte optische Vektor (C4) ist.

6. Optische Erfassungsvorrichtung (90) nach Anspruch 3, wobei die erste optische Achse (O1), die zweite optische Achse (O2) und die vierte optische Achse (O4) sich in demselben Punkt (A) schneiden.

7. Optische Erfassungsvorrichtung (90) nach einem der vorhergehenden Ansprüche, wobei der erste optische Sensor (10) und/oder der zweite optische Sensor (20) jeweils einen ersten optischen Blickwinkel ($\alpha_1$) und/oder einen zweiten optischen Blickwinkel ($\alpha_2$) zwischen fünf und zwanzig Grad haben.

8. Optische Erfassungsvorrichtung (90) nach einem der vorangehenden Ansprüche, wobei der Träger (1) ein einteiliger Träger (1) ist.

9. Optische Erfassungsvorrichtung (90) nach einem der vorangehenden Ansprüche, wobei der erste optische Sensor (10) und/oder der zweite optische Sensor (20) vom Typ Global Shutter ist.

10. Optische Erfassungsvorrichtung (90) nach einem der vorangehenden Ansprüche, wobei der erste optische Sensor (10) eine Linse (11) aufweist, die auf einer Halterung angebracht ist, die in Bezug auf eine Sensorzelle (12) des optischen Sensors (10) verschiebbar ist, wobei der Träger (1) Mittel zur elastischen Verbindung (16) des Trägers (1) mit der Halterung (14) aufweist.

11. Vorrichtung zur Straßenüberwachung (100) mit einer optischen Erfassungsvorrichtung (90) nach einem der vorhergehenden Ansprüche.

12. Verfahren zur Erzeugung eines Straßenüberwachungsbildes, das die folgenden Schritte aufweist:

- Erfassen eines ersten Bildes einer Straße, eines zweiten Bildes der Straße und eines dritten Bildes der Straße jeweils durch die erste, die zweite und die dritte Sensorzelle der optischen Erfassungsvorrichtung (90) der Vorrichtung zur Straßenüberwachung nach Anspruch 11;
- Integrieren des ersten Bildes der Straße und/oder des zweiten Bildes der Straße in das dritte Bild der Straße.

**Claims**

1. Optical capture device (90) comprising:

- a support (1);
- a first optical sensor (10) having a first sensitive cell (12) able to acquire a first image of a scene having a first resolution and first optics having a first field angle ($\alpha_1$) centred about a first optical axis (O1) oriented along a first normalized optical vector and that defines a first optical capture field (13);
- a second optical sensor (20) having a second sensitive cell able to acquire a second image of the scene having a second resolution and second optics having a second field angle ($\alpha_2$) centred about a second optical axis (O2) oriented along a second normalized optical vector and that defines a second optical capture field (23);
- a third optical sensor (30) having a third sensitive cell able to acquire a third image of the scene having a third resolution and third optics having a third field angle ($\alpha_3$) centred about a third optical axis (O3) oriented along a third normalized optical vector and that defines a third optical capture field (33);

wherein:

the third field angle ($\alpha_3$) is greater than or equal to sixty percent of the sum of the first field angle ($\alpha_1$) and the second field angle ($\alpha_2$), and the first resolution and/or the second resolution is greater than the third resolution; the first optical sensor (10), the second optical sensor (20) and the third optical sensor (30) being mounted on the support (1) so as to satisfy the following conditions:

- the third optical field (33) comprises at least a first portion of the first optical field (13) and at least a second portion of the second optical field (23);
- the first normalized optical vector (C1), the second normalized optical vector (C2) and the third normalized vector (C3) satisfy the following relationships:

a)

[Math 1]
$$\left(\overrightarrow{C1} \wedge \vec{c}\right).\left(\overrightarrow{C2} \wedge \vec{c}\right) = 0 \ \text{or}$$
$$abs\left(\frac{\overrightarrow{c1} \wedge \vec{c}}{\|\overrightarrow{c1} \wedge \vec{c}\|} \cdot \frac{\overrightarrow{c2} \wedge \vec{c}}{\|\overrightarrow{c2} \wedge \vec{c}\|}\right) > 0.996$$

b)

[Math 2]
$$\left(\overrightarrow{C2} \wedge \vec{C}\right).\left(\overrightarrow{C3} \wedge \vec{C}\right) = 0 \ \text{or}$$
$$abs\left(\frac{\overrightarrow{c2} \wedge \vec{c}}{\|\overrightarrow{c2} \wedge \vec{c}\|} \cdot \frac{\overrightarrow{c3} \wedge \vec{c}}{\|\overrightarrow{c3} \wedge \vec{c}\|}\right) > 0.996$$

c)

[Math 3]
$$\left(\overrightarrow{C1} \wedge \vec{C}\right).\left(\overrightarrow{C3} \wedge \vec{C}\right) = 0 \ \text{or}$$
$$abs\left(\frac{\overrightarrow{c1} \wedge \vec{c}}{\|\overrightarrow{c1} \wedge \vec{c}\|} \cdot \frac{\overrightarrow{c3} \wedge \vec{c}}{\|\overrightarrow{c3} \wedge \vec{c}\|}\right) > 0.996$$

with

$$[\text{Math } 4]$$

$$\vec{C} = \frac{\vec{C1} + \vec{C2} + \vec{C3}}{\left\| \vec{C1} + \vec{C2} + \vec{C3} \right\|}$$

in which

C is a resulting normalized optical vector corresponding to the sum of the first normalized vector (C1), the second normalized vector (C2) and the third normalized vector (C3);
C1 is the first normalized optical vector (C1)
C2 is the second normalized optical vector (C2)
C3 is the third normalized optical vector (C3).

2. Optical capture device (90) according to Claim 1, wherein:

- the first sensitive cell (12) comprises a plurality of first light capture elements (17) arranged in a plurality of first rows (18) extending parallel to a first direction defined by a first normalized row vector (H1),
- the second sensitive cell (22) comprises a plurality of second light capture elements (24) arranged in a plurality of second rows (25) extending parallel to a second direction defined by a second normalized row vector (H2);
- the third sensitive cell (32) comprises a plurality of third light capture elements (34) arranged in a plurality of third rows (35) extending parallel to a third direction defined by a third normalized row vector (H3), the first optical sensor (10), the second optical sensor (20) and the third optical sensor (30) being mounted on the support (1) so as also to satisfy the following conditions:
- the first normalized row vector (H1), the second normalized row vector (H2) and the third normalized row vector (H3) satisfy the following relationships:

d)

$$[\text{Math } 5]$$

$$abs\left( \frac{\vec{C1} \wedge \vec{H1}}{\left\| \vec{C1} \wedge \vec{H1} \right\|} \cdot \frac{\vec{C2} \wedge \vec{H2}}{\left\| \vec{C2} \wedge \vec{H2} \right\|} \right) > 0.996$$

e)

$$[\text{Math } 6]$$

$$abs\left( \frac{\vec{C1} \wedge \vec{H1}}{\left\| \vec{C1} \wedge \vec{H1} \right\|} \cdot \frac{\vec{C3} \wedge \vec{H3}}{\left\| \vec{C3} \wedge \vec{H3} \right\|} \right) > 0.996$$

f)

$$[\text{Math } 7]$$

$$abs\left( \frac{\vec{C2} \wedge \vec{H2}}{\left\| \vec{C2} \wedge \vec{H2} \right\|} \cdot \frac{\vec{C3} \wedge \vec{H3}}{\left\| \vec{C3} \wedge \vec{H3} \right\|} \right) > 0.996$$

in which

H1 is the first normalized row vector (H1)
H2 is the second normalized row vector (H2)
H3 is the third normalized row vector (H3).

3. Optical capture device (90) according to Claim 1 or 2, wherein the first optical sensor (10) and the second optical sensor (20) are positioned with respect to one another on the support (1) such that the angle ($\Delta_{O1O2}$) formed by the first optical axis (O1) and the second optical axis (O2) satisfies the following relationship:

[Math 8]

$$\Delta_{O1O2} \le [(\alpha_1 + \alpha_2) / 2] - R$$

in which

$\Delta_{O1O2}$ is the angle formed by the first optical axis (O1) and the second optical axis (O2) in degrees;
$\alpha_1$ is the first field angle in degrees;
$\alpha_2$ is the second field angle in degrees;
R is a strictly positive optical angle of overlap.

4. Optical capture device (90) according to the preceding claim, wherein the optical angle of overlap is between five percent and thirty percent of the greater angle out of the first field angle $\alpha_1$ and the second field angle $\alpha_2$.

5. Optical capture device (90) according to any one of the preceding claims, comprising a fourth optical sensor (40) having a fourth sensitive cell and fourth optics having a fourth field angle ($\alpha_4$) centred about a fourth optical axis (O4) oriented along a fourth normalized optical vector, the fourth optical sensor being mounted on the support (1) so as to satisfy the following conditions:

- the third field angle ($\alpha_3$) is greater than or equal to sixty percent of the sum of the first field angle ($\alpha_1$), the second field angle ($\alpha_2$) and the fourth field angle ($\alpha_4$);
- the third optical field (33) comprises at least a fourth portion of the fourth optical field (43);

the fourth optical vector (C4) satisfies the following relationships:

d)

[Math 9]

$$\left(\vec{C1} \wedge \vec{C'}\right).\left(\vec{C4} \wedge \vec{C'}\right) = 0 \text{ or}$$

$$abs\left(\frac{\vec{C1} \wedge \vec{C'}}{\|\vec{C1} \wedge \vec{C'}\|} \cdot \frac{\vec{C4} \wedge \vec{C'}}{\|\vec{C4} \wedge \vec{C'}\|}\right) > 0.996$$

e)

[Math 10]

$$\left(\vec{C2} \wedge \vec{C'}\right).\left(\vec{C4} \wedge \vec{C'}\right) = 0 \text{ or}$$

$$abs\left(\frac{\vec{C2} \wedge \vec{C'}}{\|\vec{C2} \wedge \vec{C'}\|} \cdot \frac{\vec{C4} \wedge \vec{C'}}{\|\vec{C4} \wedge \vec{C'}\|}\right) > 0.996$$

f)

[Math 11]

$$\left(\vec{C3} \wedge \vec{C'}\right).\left(\vec{C4} \wedge \vec{C'}\right) = 0 \text{ or}$$

$$abs\left(\frac{\vec{C3} \wedge \vec{C'}}{\|\vec{C3} \wedge \vec{C'}\|} \cdot \frac{\vec{C4} \wedge \vec{C'}}{\|\vec{C4} \wedge \vec{C'}\|}\right) > 0.996$$

with

$$\vec{C'} = \frac{\vec{C1} + \vec{C2} + \vec{C3} + \vec{C4}}{\left\| \vec{C1} + \vec{C2} + \vec{C3} + \vec{C4} \right\|}$$

[Math 12]

in which
C4 is the fourth normalized optical vector (C4).

6. Optical capture device (90) according to Claim 3, wherein the first optical axis (O1), the second optical axis (O2) and the fourth optical axis (O4) intersect at one and the same point (A).

7. Optical capture device (90) according to any one of the preceding claims, wherein the first optical sensor (10) and/or the second optical sensor (20) respectively have a first optical field angle ($\alpha_1$) and/or a second optical field angle ($\alpha_2$) of between five and twenty degrees.

8. Optical capture device (90) according to any one of the preceding claims, wherein the support (1) is a single-piece support (1).

9. Optical capture device (90) according to any one of the preceding claims, wherein the first optical sensor (10) and/or the second optical sensor (20) are/is a global shutter sensor.

10. Optical capture device (90) according to any one of the preceding claims, wherein the first optical sensor (10) comprises a lens (11) mounted on a mount able to be moved with respect to a sensitive cell (12) of the optical sensor (10), the support (1) comprising elastic connecting means (16) for connecting the support (1) to the mount (14).

11. Road monitoring device (100) comprising an optical capture device (90) according to any one of the preceding claims.

12. Method for generating a road monitoring image, comprising the following steps:

- acquiring a first image of a road, a second image of the road and a third image of the road by way of the first, the second and the third sensitive cell, respectively, of the optical capture device (90) of the road monitoring device according to Claim 11;
- integrating the first image of the road and/or the second image of the road into the third image of the road.

[Fig. 1]

[Fig. 2]

[Fig. 3]

[Fig. 4]

120 110

102

[Fig. 5]

121 111

103

[Fig. 6]

122

110    111    112

102    103    104

[Fig. 7]

123

112

104

## EP 4 327 549 B1

**Documents brevets cités dans la description**

- US 20160148062 A1